# EUROPÄISCHE PATENTSCHRIFT

(11) **EP 0 973 027 B1**
(45) Veröffentlichungstag und Bekanntmachung des Hinweises auf die Patenterteilung: **23.04.2008**
(21) Anmeldenummer: 99112860.4
(22) Anmeldetag: 03.07.1999
(51) Int. Cl.: G01N 27/30, G01N 27/403

(54) **Verfahren zum Herstellen einer Elektrode**
Method for manufacturing an electrode
Procédé de fabrication d'une électrode

(30) Priorität: 14.07.1998 DE 19831529
(43) Veröffentlichungstag der Anmeldung: 19.01.2000
(73) Patentinhaber: Micronas GmbH, 79108 Freiburg i. Br. (DE)
(72) Erfinder: Igel, Günter, 79331 Teningen (DE)
(74) Vertreter: Patentanwälte Westphal, Mussgnug & Partner

(56) Entgegenhaltungen:
- EP-A- 0 653 629
- EP-A- 0 689 051
- WO-A-97/38301
- DE-A- 4 130 135
- DE-A- 4 244 338
- DE-A- 4 422 049
- DE-A- 19 529 371
- JP-A- 62 218 580
- US-A- 5 118 403

## Beschreibung

Die Erfindung betrifft ein Verfahren zum Herstellen einer Elektrode gemäss Anspruch 1.

JP62218580 offenbart ein Verfahren zur Herstellung einer metallischen Schicht auf oder in einem keramischen Substrat, bei dem mit einem Laserstrahl eine Öffnung in das Substrat gebohrt wird. Da sich das Substrat in einer das Metall enthaltenen Elektrolytlösung befindet, scheidet sich durch die Wechselwirkung der Lösung mit dem Laserstrahl ein dünner Metallfilm im Wirkungsbereich des Laserstrahls ab.

Ein Verfahren bei dem auf einem Substrat eine Oberflächenstruktur mit wenigstens einem elektrisch leitfähigen, zumindest eine Spitze oder Kante aufweisenden Vorsprung erzeugt wird ist aus DE 44 22 049 A1 bereits bekannt. Dabei wird auf ein Siliziumsubstrat mit Hilfe anisotroper oder isotroper Ätzverfahren zunächst eine dreidimensionale Oberflächenstruktur erzeugt, die eine Vielzahl von benachbart nebeneinander angeordneten, pyramiden- oder kegelförmigen Vorsprüngen aufweist, die jeweils eine Spitze haben. Dann wird das Substrat in eine Polymerlösung eingetaucht oder es wird eine Polymerlösung auf das Substrat aufgesprüht oder aufgegossen. Dabei kommt es an den Spitzen der Vorsprünge zu einem Filmabriß, der dadurch kontrolliert wird, daß die die Vorsprünge aufweisende Oberflächenstruktur dem Dampf eines Lösungsmittels ausgesetzt wird. Durch den Filmabriss soll erreicht werden, daß die Spitzen weitgehend frei von der Polymerlösung bleiben, während die Spitzen umgrenzenden Oberflächenbereiche der Vorsprünge mit der Polymerlösung, die nach dem Aushärten eine elektrisch isolierende Schicht bildet, bedeckt sind. Das vorbekannte Verfahren hat sich jedoch in der Praxis als problematisch erwiesen, da der Filmabriss ein statistischer Vorgang ist, der bei den einzelnen Vorsprüngen des Substrats nicht immer gleich abläuft. Insbesondere kann es zu einem unterschiedlichen Fließverhalten der Polymerlösung an den einzelnen Vorsprüngen der Oberflächenstruktur kommen. Ungünstig ist außerdem, daß die Polymerlösung ein Lösungsmittel enthält, das beim Aushärten der Lackschicht freigesetzt wird. Auch kann die Lackschicht toxische Stoffe enthalten, was insbesondere dann nachteilig, wenn die nach dem Verfahren hergestellten Elektroden zum Untersuchen lebender biologischer Zellen verwendet werden sollen, die auf toxische Stoffe sehr empfindlich reagieren. Dadurch kann es also zu einer Beeinflussung der Zellen und somit zu Meßfehlern kommen. Ungünstig ist außerdem, daß durch die in den zwischen den pyramiden- oder kegelförmigen Vorsprüngen befindlichen Zwischenräumen angeordnete Lackschicht die Höhe der Vorsprüngen, d.h. der Abstand zwischen der am weitesten vorstehenden Stelle eines Vorsprungs und der am weitesten zurückversetzten Stelle der dazu benachbarten Lackschicht, vermindert wird. Der an der Spitze des Vorsprungs befindliche Elektrodenbereich kann dadurch beispielsweise nicht so gut durch eine Zellmembran hindurch im Inneren der Zelle positioniert werden, um dieses mit der Elektrodenspitze zu untersuchen. Auch läßt sich die Elektrodenspitze nur schlecht in ein zu untersuchendes anderes weiches Material einstechen.

Es besteht deshalb die Aufgabe, ein Verfahren der eingangs genannten Art zu schaffen, mit dem eine Mikro-Elektrode, die an ihrer Oberfläche eine elektrisch leitfähige, von einem elektrisch isolierenden Oberflächenbereich umgrenzte Spitze oder Kante aufweist, unter Vermeidung einer im Bereich der Spitze oder Kante verbleibenden Lackschicht hergestellt werden kann.

Die Lösung dieser Aufgabe besteht darin, daß in das Substrat ein Zuführkanal eingebracht wird, der dicht benachbart zu der an der Oberfläche des Substrats angebrachten Spitze oder Kante mündet, daß durch den Zuführkanal eine bei der Spitze oder Kante austretende Chemikalie zugeführt wird, die bei Bestrahlung mit elektromagnetischer und/oder korpuskularer Strahlung einen elektrisch leitfähigen Stoff, insbesondere ein Metall ausscheidet, und daß die Chemikalie zum Abscheiden des elektrisch leitfähigen Stoffs an der Spitze oder Kante im Bereich der Spitze oder Kante mit elektromagnetischer und/oder korpuskularer Strahlung bestrahlt wird.

Die Spitze oder Kante kann beispielsweise mit einem herkömmlichen Strukturierungsverfahren, wie anisotropem Ätzen, Unterätzen einer Lackschicht oder Bedampfen der Substratoberfläche durch eine in einer benachbart zu der Substratoberfläche angeordneten Maske befindliche Öffnung hindurch, erzeugt werden. Durch den Zuführkanal gelangt die Chemikalie bevorzugt in den Bereich der Spitze oder Kante des Substrats, so daß sich der durch Unterstützung der elektromagnetischen und/oder korpuskularen Strahlung aus der Chemikalie abgeschiedene elektrisch leitfähige Stoff bevorzugt dort anlagert. Dabei wird unter einer elektromagnetischen und/oder korpuskularen Strahlung eine Strahlung verstanden, die der Chemikalie Energie zuführt, beispielsweise optische Strahlung, wie Licht, Infrarot- oder ultraviolette Strahlung, Röntgenstrahlung, oder Teilchenstrahlung, wie z.B. Alpha-, Beta- oder Gamma-Strahlung.

Zweckmäßigerweise wird die Zuführgeschwindigkeit der im Bereich der Spitze oder Kante austretenden Chemikalie so gewählt, daß diese während der gesamten Abschaltedauer des elektrisch leitfähigen Stoffs im Bereich der Spitze oder Kante angeordnet ist. Dadurch wird ein eventuelles Abscheiden des leitfähigen Stoffs außerhalb des Bereichs der Spitze oder Kante vermieden. Die nach dem Verfahren hergestellte Elektrode ist also nur an dem im Bereich der Spitze oder Kante befindlichen Teil ihrer Oberfläche elektrisch leitfähig, während die übrigen Oberflächenbereiche elektrisch isoliert sind. Dies kann beispielsweise dadurch erreicht werden, daß als Substrat ein elektrischer Isolator verwendet wird oder daß ein elektrisch leitfähiges Substrat vor dem Abschalten des Elektrodenmaterials mit einer isolierenden Oberflächenschicht versehen wird. Insgesamt ergibt sich also unter Vermeidung eine die Elektrodenschicht umgrenzenden Lackmaske eine partiell leitfähige Elektrode mit einer Mikroelektrodenspitze oder -kante, die eine ortsaufgelöste Messung elektrischer Signale ermöglicht. Die Elektrode eignet sich insbesondere für eine Untersuchung oder Behandlung von an der Oberfläche der Elektrode angelagerten biologischen Zellen. Der Zuführkanal kann beispielsweise durch Laserbohren oder Plasmaätzen in das Substrat eingebracht werden. Gegebenenfalls kann das Eindringen des Zuführkanals von der der Spitze oder Kante abgewandten Rückseite des Substrats her erfolgen. Dazu kann beispielsweise an der Rückseite des Substrats eine ätzbeständige Maske aufgetragen werden.

Eine vorteilhafte Ausführungsform des Verfahrens sieht vor, daß die elektromagnetische und/oder oder korpuskulare Strahlung durch den Zuführkanal hindurch in den Bereich der Spitze oder Kante eingestrahlt wird. Zu diesem Zweck kann beispielsweise an dem der Spitze oder Kante abgewandten Ende des Zuführkanals ein Laserstrahl in den Zuführkanal eingekoppelt werden. Die optische Strahlung kann dadurch auf einfache Weise an der Spitze oder Kante positioniert werden. Da die elektromagnetische und/oder korpuskulare Strahlung die in dem Zuführkanal befindliche Chemikalie durchsetzt, wird der elektrisch leitfähige Stoff auch in dem Zuführkanal abgeschieden und kann sich an dessen Wandung anlagern. Die Wandung des Zuführkanals bildet dann eine elektrisch leitfähige Verbindung zu der Elektrodenspitze- oder kante. Bei der nach dem Verfahren hergestellten Elektrode kann über diese Verbindungsleitung beispielsweise eine elektrische Spannung an die Elektrodenspitze angelegt oder ein Meßsignal an der Elektrodenspitze abgegriffen werden. In vorteilhafter Weise bildet der auf die Wandung des Zuführkanals aufgebrachte elektrisch leitfähige Stoff aber auch eine Hohlelektrode, die im Vergleich zu ihren Abmessungen in der Oberflächenebene des Substrats eine relativ große Oberfläche aufweist. Die nach dem Verfahren hergestellte Elektrode ermöglicht deshalb trotz einer hohen Ortsauflösung einen guten elektrischen Kontakt zu einem zu untersuchenden oder behandelnden Medium.

Die vorstehend genannte Aufgabe kann auch dadurch gelöst werden, daß die Oberfächenstruktur aus einem elektrisch leitfähigen Material hergestellt wird, daß im Bereich der Spitze oder Kante auf dieses Material wenigstens eine elektrisch leitfähige Elektrodenschicht aufgalvanisiert und/oder durch elektrostatisches Pulverbeschichten aufgetragen wird und daß anschließend ein die an der Spitze oder Kante befindliche Elektrodenschicht umgrenzender Oberflächenbereich des Substrats mit einer chemischen Reaktion in eine isolierende Schicht umgewandelt oder mit einer solchen versehen wird.

Dabei macht man sich die Erkenntnis zunutze, daß beim Anlegen einer elektrischen Spannung an das Substrat bzw. deren Oberflächenstruktur im Bereich der Spitze oder Kante eine besonders hohe elektrische Feldstärke auftritt. Das aufzugalvanisierende oder durch elektrostratisches Pulverbeschichten aufzutragende Elektrodenmaterial lagert sich deshalb bevorzugt im Bereich der Spitze oder Kante des Substrats an, während der übrige Oberflächenbereich des Substrats von dem Elektrodenmaterial freibleibt, so daß dort das sich von dem Elektrodenmaterial unterscheidende Substratmaterial angeordnet ist. Durch eine chemische Behandlung wird der das Substratmaterial aufweisende Oberflächenbereich in eine isolierende Schicht umgewandelt oder mit einer solchen versehen, wodurch die Elektrodenoberfläche dann nur noch in dem Bereich der Elektrodenschicht elektrisch leitfähig ist. Dabei wird die chemische Behandlung so gewählt, daß die chemische Reaktion nur in dem Substratmaterial stattfindet, während die Elektrodenschicht chemisch weitestgehend unverändert bleibt. In vorteilhafter Weise kann also auf das Auftragen einer die Elektrodenschicht umgrenzenden Lackmaske verzichtet werden.

Eine Ausführungsform des Verfahrens sieht vor, daß die elektrisch leitfähige Elektrodenschicht auch außerhalb des Bereichs der Spitze oder Kante auf das Substrat aufgebracht wird, und daß danach an der Oberfläche der Elektrodenschicht durch Ätzen Elektrodenmaterial abgetragen wird, bis die Elektrodenschicht bis auf einen im Bereich der Spitze oder Kante verbleibenden Restbereich entfernt ist. Eventuell außerhalb des Bereichs der Spitze oder Kante auf das Substrat aufgebrachtes Elektrodenmaterial wird also durch Ätzen wieder von der Oberfläche des Substrats abgetragen. An der Spitze der Kante verbleibt ein dann die Elektrodenspitze bildender Restbereich, da die Elektrodenschicht im Bereich der Spitze der Kante wegen der dort größeren elektrischen Feldstärke mit einer größeren Dicke aufgalvanisiert bzw. beschichtet wird. Das Aufgalvaniseren bzw. elektrostatisches Beschichten des Elektrodenmaterials kann deshalb mit einer größeren Stromstärke und somit schneller durchgeführt werden. Das Ätzen des außerhalb des Spitzen- oder Kantenbereichs aufgetragenen Elektrodenmaterials kann beispielsweise in einem Ätzbad oder durch Bedampfen oder Besprühen mit einem Ätzmittel erfolgen. Es kann aber auch ein Trockenätzverfahren, zum Beispiel reaktives Ionenätzen zur Anwendung kommen.

Besonders vorteilhaft ist, wenn für die Elektrodenschicht ein Material gewählt wird, das oxidationsbeständiger als das Substrat-Material ist und wenn die isolierende Schicht durch Oxidieren des die Elektrodenschicht umgrenzenden Oberflächenbereichs des Substrats erzeugt wird. Das Substrat kann dazu beispielsweise unter Wärmeeinwirkung einer sauerstoffhaltigen Atmosphäre ausgesetzt werden. Durch das Oxidieren des Substrats ergibt sich an der Oberfläche des Substrats eine elektrisch gut isolierende Schicht.

Eine andere Möglichkeit besteht darin, daß für die Elektrodenschicht ein Material gewählt wird, das nitrierbeständiger als das Substrat-Material ist und daß die isolierende Schicht durch Nitrieren des die Elektrodenschicht umgrenzenden Oberflächenbereichs des Substrats erzeugt wird. Das Nitrieren kann beispielsweise mittels einer Wärmebehandlung des Substrats in einer stickstoffhaltigen Atmosphäre durchgeführt werden.

Besonders vorteilhaft ist, wenn die isolierende Schicht durch anodische Oxidation des die Elektrodenschicht umgrenzenden Oberflächenbereichs des Substrats hergestellt wird. Dazu kann beispielsweise der die Elektrodenschicht aufweisende Bereich des Substrats zum Abgetragen der Elektrodenschicht bis auf den im Bereich der Spitze oder Kante verbleibenden Restbereich in einem die Elektrodenschicht ätzenden Elektrolyten angeordnet werden. Anschließend wird der Elektrolyt zum anodischen Oxidieren des den verbleibenden Restbereichs der Elektrodenschicht umgrenzenden Oberflächenbereichs des Substrats gegen einen anderen, anodisch oxidierenden Elektrolyten ausgetauscht und es wird eine elektrische Spannung zwischen dem Substrat und dem Elektrolyten angelegt. Als Elektrolyt kann beispielsweise Schwefelsäure, Wasserstoffperoxyd, Oxalsäure oder Chromsäure verwendet werden.

Eine vorteilhafte Ausführungsform des Verfahrens sieht vor, daß beim Erzeugen der Oberflächenstruktur wenigstens eine elektrisch leitfähige Beschichtung auf das Substrat aufgebracht wird, die an der Oberfläche der Oberflächenstruktur angeordnet ist. Als Substratmaterial kann dann ein gut strukturierbares Material verwendet werden, das gegebenenfalls auch ein Nichtleiter sein kann. Das Beschichtungsmaterial wird so gewählt, daß es chemisch gut in einen elektrischen Isolator umwandelbar ist. Wenn die Oberflächenstruktur vor dem Beschichten des Substrats auf dieses aufgebracht wird, kann als Beschichtungsmaterial sogar ein Material verwendet werden, das selbst nicht oder nur schlecht strukturierbar ist.

Bei einer vorteilhaften Ausführungsform der Erfindung ist vorgesehen, daß das Substrat zumindest mit einem die Spitze oder Kante aufweisenden Bereich in einem ersten Elektrolyten angeordnet wird, der Ionen des aufzugalvanisierenden Elektrodenmaterials nicht oder nur in geringer Konzentration aufweist, daß durch den Zuführkanal ein bei der Spitze oder Kante austretender zweiter, die aufzubringenden Ionen aufweisender Elektrolyt zugeführt wird, und daß zum Aufgalvanisieren der Elektrodenschicht auf die Spitze oder Kante eine elektrische Spannung zwischen dem Substrat und dem zweiten Elektrolyten angelegt wird. Der die Ionen des aufzugalvanisierenden Elektrodenmaterials enthaltende Elektrolyt wird also durch den Zuführkanal gezielt zu dem die Spitze oder Kante aufweisenden Oberflächenbereich des Substrats geleitet, wodurch ein Abscheiden von Elektrodenmaterial an einem außerhalb dieses Oberflächenbereichs befindlichen Oberflächenbereich des Substrats vermieden wird. Bei einem elektrisch leitfähigen Substrat wird außer im Bereich der Spitze oder Kante auch an der Wandung des Zuführkanals Elektrodenmaterial abgeschieden, so daß diese eine elektrisch leitfähige Verbindung zu der Elektrodenspitze oder -kante bildet.

Vorzugsweise wird der Zuführkanal derart in das Substrat eingebracht, daß sich sein Querschnitt ausgehend von dem der Spitze oder Kante abgewandten Kanalende zu der im Bereich der Spitze oder Kante abgeordneten Mündung vorzugsweise benachbart zu der Mündung vermindert. Dadurch kann der Zuführkanal fertigungstechnisch besser hergestellt werden. Dabei kann der Zuführkanal gegebenenfalls im Bereich seiner an der Spitze oder Kante angeordneten Mündung einen Absatz oder eine Stufe aufweisen, die einen Übergang zwischen einem Kanalabschnitt mit größerem Querschnitt zu einem die Mündung aufweisenden Kanalabschnitt geringeren Querschnitts bilden. Durch den bereichsweise erweiterten Kanalquerschnitt können außerdem eventuelle, bei dem Aufbringen der Elektrodenschicht anfallende Reaktionsprodukte besser abgeführt werden.

Bei einer bevorzugten, vorteilhaften Ausbildungsform der Erfindung wird als Substrat ein Halbleitermaterial verwendet. Gegebenenfalls kann dann bei der Herstellung der Elektrode gleich eine Meß- oder Auswerteelektronik in das Halbleitermaterial integriert werden. Als Halbleitermaterial kann beispielsweise Silizium verwendet werden, das durch Oxidation mit einer elektrisch gut isolierenden Passivierungsschicht versehen werden kann.

Besonders vorteilhaft ist, wenn im Bereich der Spitze oder Kante ein Edelmetall aufgetragen wird. Die Elektrodenspitze oder -kante ist dann besonders korrosionsbeständig und verhält sich bei der chemischen Behandlung zum Aufbringen der isolierenden Schicht auf das Substratmaterial chemisch neutral. Außerdem ist die nach dem Verfahren hergestellte Elektrode besser zum Untersuchen von chemisch aggresiven Medien, wie beispielsweise Salze enthaltende Lösungen geeignet. Im Vergleich zu Verfahren, bei denen zunächst großflächig eine Edelmetallschicht auf das Substrat aufgetragen und anschließend im Bereich der Spitze oder Kante eine Maske aufgebracht wird, um den außerhalb des Spitzen- oder Kantenbereichs befindlichen Bereich der Edelmetallschicht wieder zu entfernen, hat das vorliegende Verfahren den Vorteil, daß ein Kontamination der für das Herstellen der Maske und das Ätzen verwendeten Fertigungsanlagen mit dem Edelmetall vermieden wird. Eine solche Kontamination der Fertigungsanlagen ist vor allem bei Elektroden, in deren Substrat in unterhalb der Elektrodenschicht befindliche Schichten mittels Maskentechnik CMOS-Halbleiter integriert werden sollen, unerwünscht, da bereits geringste Verunreinigungen mit Edelmetall die Funktionsfähigkeit der CMOS-Halbleiter und insbesondere deren Gate-Oxyde beeinträchtigen können. Da die für die Maskentechnik benötigten Fertigungsanlagen aufwendig und teuer sind, werden nämlich üblicherweise zum Herstellen der unteren, die CMOS-Bauelemente enthaltenden Schichten dieselben Fertigungsanlagen verwendet, wie für die oberflächennahen Schichten. Bei dem vorliegenden Verfahren können dagegen für das Aufbringen der Edelmetall-Elektrodenschicht durch galvanisches Beschichten, elektrostatisches Pulverbeschichten und/oder strahlungsunterstütztes Ausscheiden eines elektrisch leitfähigen Stoffes aus einer Chemikalie separate Fertigungsanlagen verwendet werden, die wesentlich kostengünstiger bereitgestellt werden können.

Die Oberfächenstruktur kann dadurch erzeugt werden, daß an der Oberfläche des Substrats in elektrisch isolierendes Material eine Vertiefung eingebracht wird, daß in diese Vertiefung ein elektrisch leitfähiges Material, insbesondere ein Metall eingebracht wird, daß anschließend ein das leitfähige Material umgrenzender Bereich des isolierenden Materials durch Ätzen entfernt wird, bis das leitfähige Material eine an der Substratoberfläche vorstehende Spitze oder Kante bildet, und daß danach auf die Spitze oder Kante wenigstens eine elektrisch leitfähige Elektrodenschicht aufgalvanisiert und/oder durch elektrostatisches Pulverbeschichten aufgebracht wird. Dadurch ist es möglich, die die Spitze oder Kante aufweisende Oberflächenstruktur unter ausschließlicher Verwendung der bei der Fertigung von CMOS-Halbleitern üblichen Fertigungsprozesse herzustellen. In vorteilhafter Weise können die meisten der für das Herstellen der Oberflächenstruktur vorgesehenen Verfahrensschritte auch gleichzeitig für die Herstellung von in oberflächennahen Schichten eines CMOS-Halbleiters befindlichen Leiterbahnen verwendet werden, so daß diese zusammen mit der Oberflächenstruktur in einem Arbeitsgang hergestellt werden können. In das Substrat der Elektrode können somit auf einfache Weise CMOS-Bauelemente integriert werden. Diese können beispielsweise Teil eines Meßverstärkers oder einer Auswertevorrichtung sein und/oder einen Halbleiterschalter umfassen, mit dem der an der Spitze oder Kante befindliche aktive Elektrodenbereich der Elektrode mit einer Spannungsquelle verbindbar ist.

Besonders vorteilhaft ist, wenn nach dem Aufbringen der Elektrodenschicht erneut ein das in die Vertiefung eingebrachte leitfähige Material umgrenzender Bereich des isolierenden Materials durch Ätzen entfernt wird, und wenn der dadurch freigelegte Oberflächenbereich des leitfähigen Materials anschließend mit einer chemischen Reaktion in eine isolierende Schicht umgewandelt oder mit einer solchen versehen wird. Die elektrisch leitfähige Elektrodenschicht ist dann am freien Ende eines an seiner Oberfläche elektrisch isolierten Vorsprungs mit Abstand zu der Oberfläche des Substrats angeordnet. Insgesamt ergibt sich somit eine Punktelektrode, mit der beispielsweise bei einer biologischen Zellen das im Inneren der Zelle befindliche Zellpotential durch die Zellmembran hinduch ortsaufgelöst gemessen werden kann. Dabei durchsetzt der elektrisch isolierte Vorsprung die Zellmembran und die Elektrodenschicht ist gegen die Zellmembran isoliert im Inneren der Zelle angeordnet.

Eine Ausführungsform sieht vor, daß die in das Substrat eingebrachte Vertiefung vollständig mit dem elektrisch leitfähigen Material gefüllt wird. Dadurch ergibt sich ein besonders kompakter Elektrodenvorsprung.

Bei einer anderen Ausführungsform wird die in das Substrat eingebrachte Vertiefung mit dem elektrisch leitfähigen Material ausgekleidet, insbesondere durch Beschichten. Dadurch ist es möglich, die Elektrode als Hohlelektrode auszubilden.

Nachfolgend sind Ausführungsbeispiele anhand der Zeichnungen näher erläutert. Es zeigen:
- Fig.1: eine Seitenansicht eines elektrisch leitfähigen Substrats, das eine Oberflächenstruktur mit einem eine scharfe Spitze aufweisenden pyramidenförmigen Vorsprung hat,
- Fig.2: einen Querschnitt durch die in Fig.1 gezeigte Anordnung nach dem Aufgalvanisieren einer Elektrodenschicht auf die Spitze des Vorsprungs,
- Fig.3: einen Querschnitt durch die in Fig.2 gezeigte Elektrode nach dem Oxidieren eines die Elektrodenschicht umgrenzenden oberflächennahen Bereichs des Substrats
- Fig.4: eine erfindungsgemässe Darstellungähnlich Fig.1, wobei jedoch in das Substrat ein strichliniert dargestellter Zuführkanal eingebracht wurde, dessen Mündung von einer scharfen Kante umgrenzt ist,
- Fig.5: das erfindungsgemässe in Fig.4 gezeigte Substrat nach dem lichtunterstützten Aufbringen einer Elektrodenschicht auf die Kante des Vorsprungs,
- Fig.6: einen Querschnitt durch die in Fig.5 gezeigte erfindungsgemässe Elektrode nach dem Oxidieren des die Elektrode umgrenzenden Oberflächenbereichs des Substrats,
- Fig.7 u. Fig.8: einen Querschnitt durch eine Vorrichtung zum Aufgalvanisieren einer metallischen Elektrodenschicht auf den Spitzen- oder Kantenbereich des Substrats,
- Fig.9: einen Querschnitt durch ein Substrat, das eine elektrisch isolierende Schicht aufweist, die von einer Vertiefung durchsetzt ist,
- Fig.10: das in Fig.9 gezeigte Substrat, nachdem in die Vertiefung ein elektrisch leitfähiges Material eingebracht wurde,
- Fig.11: das in Fig.10 gezeigte Substrat, nach dem Wegätzen eines das leitfähige Material umgrenzenden Bereichs der elektrisch isolierenden Schicht,
- Fig.12: das in Fig.11 gezeigte Substrat, nach dem Aufgalvanisieren einer Elektrodenschicht auf die Spitze des elektrisch leitfähigen Materials und
- Fig.13: das in Fig.12 gezeigte Substrat, nach dem anodischen Oxideren eines sich an die Elektrodenschicht anschließenden Oberflächenbereichs des leitfähigen Materials.

Bei einem Verfahren zum Herstellen einer im ganzen mit 1 bezeichneten Elektrode wird an der Oberfläche eines Substrats 2 eine dreidimensionale Oberflächenstruktur mit einem Strukturierungsverfahren, beispielsweise durch anisotropes Ätzen, durch Unterätzen einer Lackschicht oder durch Bedampfen der Substratoberfläche durch eine in einer benachbart zu der Substratoberfläche angeordneten Maske befindliche Öffnung hindurch, erzeugt.

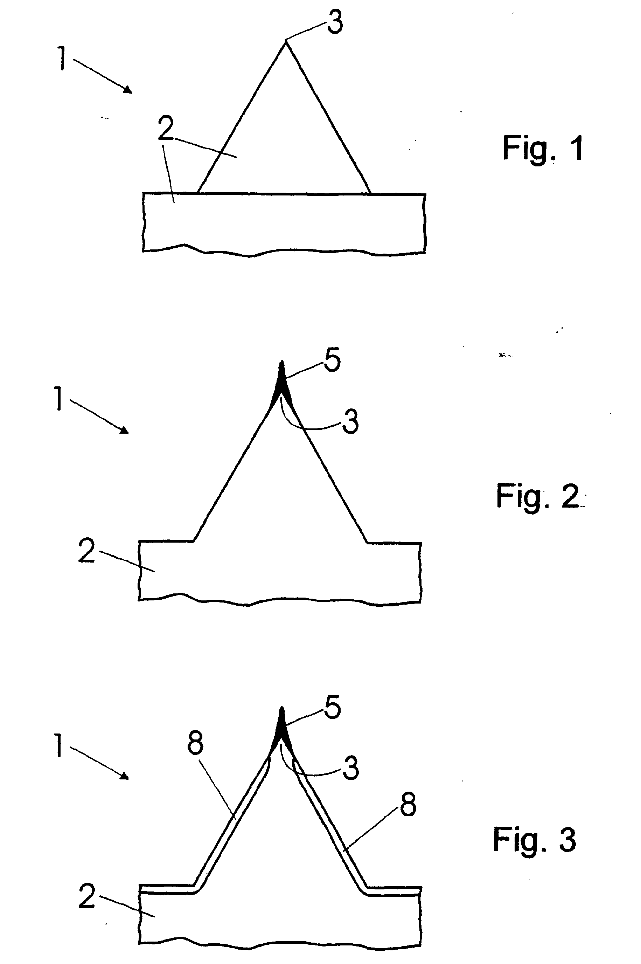

Die Oberflächenstruktur kann beispielsweise einen kegel- oder pyramidenförmigen Vorsprung aufweisen, der an seinem am weitesten vorstehenden freien Endbereich eine scharfe Spitze 3 oder eine scharfe Kante 4 aufweist. Bei dem Verfahren nach Fig.1 bis 3 besteht das Substrat 2 aus einem elektrisch leitfähigen Material, beispielsweise Silizium. Das Substrat 2 weist die Form eines Wafers auf, der an einer Oberfläche eine Vielzahl von Spitzen 3 hat, von denen in Figur 1 bis 3 aus Gründen der Übersichtlichkeit jeweils nur eine dargestellt ist.

Auf die an der Oberfläche des Substrats 2 vorstehende Spitze 3 wird eine metallische Elektrodenschicht aufgalvanisiert. Das Substrat wird dazu in einem Elektrolyten 6 eingetaucht, der Ionen des aufzugalvanisierenden Metalls enthält. In dem Elektrolyten 6 wird ferner eine Opferelektrode 7 angeordnet, die zumindest an ihrer Oberfläche das aufzugalvanisierende Metall aufweist. Dabei wird die Opferelektrode 7 vorzugsweise so in dem Elektrolyten 6 positioniert, daß die Spitze 3 des Substrats 2 der Opferelektrode 7 zugewandt ist. Dann wird das Substrat 2 mit dem Minus-Pol und die Opferelektrode 7 mit dem Plus-Pol einer elektrischen Spannungsquelle verbunden. Dadurch bildet sich in dem Elektrolyten 6 ein elektrisches Feld, das seine größte Feldstärke im Bereich der Spitze 3 des Substrats 2 aufweist. In dem elektrischen Feld bewegen sich die in dem Elektrolyten enthaltenen Kationen des aufzugalvanisierenden Metalls auf das Substrat 2 zu und lagern sich bevorzugt im Bereich der Spitze 3 an dem Substrat 2 an, da dort die elektrische Feldstärke am größten ist. Dabei bildet sich im Bereich der Spitze 3 die metallische Elektrodenschicht 5 (Fig.2), während die übrige Oberfläche des Substrats 2 von metallischem Material freibleibt. Eine eventuell sich außerhalb des Bereichs der Spitze 3 an der Oberfläche des Substrats 2 bildende dünne metallische Schicht kann gegebenenfalls mit einem anschließenden Ätzvorgang entfernt werden.

Nach dem Aufbringen der Elektrodenschicht 5 wird der Elektrolyt 6 gegen einen für eine anodische Oxidation geeigneten Elektrolyten ausgetauscht. Außerdem wird die elektrische Spannungsquelle umgepolt, d.h. der Plus-Pol wird mit dem in dem Elektrolyten 6 befindlichen Substrat 2 und der Minus-Pol mit der Opferelektrode 7 verbunden. Dadurch wird das Substrat 2 im Bereich seiner die Elektrodenschicht 5 umgrenzenden Oberfläche anodisch oxidiert. An der Oberfläche des Substrats bildet sich dadurch eine elektrisch gut isolierende Oxydschicht, z.B. bei einem Substrat 2 aus Silizium eine Siliziumoxyd- oder bei einem Substrat 2 aus Aluminium eine Aluminium-Oxydschicht. Die Elektrodenschicht 5 besteht aus einem edleren Material als das Substrat 2, zum Beispiel aus einem Edelmetall, und verändert sich daher bei der anodischen Oxydation des Substrats 2 nicht. Insgesamt ergibt sich somit eine Elektrode 1, die im Bereich der Spitze 3 partiell leitfähig ist und in dem die Elektrodenschicht 5 umgrenzenden Oberflächenbereich elektrisch isoliert ist.

Wie aus Fig.3 erkennbar ist, ist die Elektrodenschicht 5 mit dem elektrisch leitfähigen Substrat 2 verbunden, so daß beispielsweise ein an der Elektrodenschicht 5 anliegendes Meßsignal auf einfache Weise an dem Substrat 2 abgegriffen werden kann. Entsprechend kann über das Substrat 2 eine Spannung in die Elektrodenschicht 5 eingespeist werden. Die Elektrode 1 kann beispielsweise zur ortsaufgelösten Messung an einer an dem Substrat 2 angelagerten Zellkultur verwendet werden.

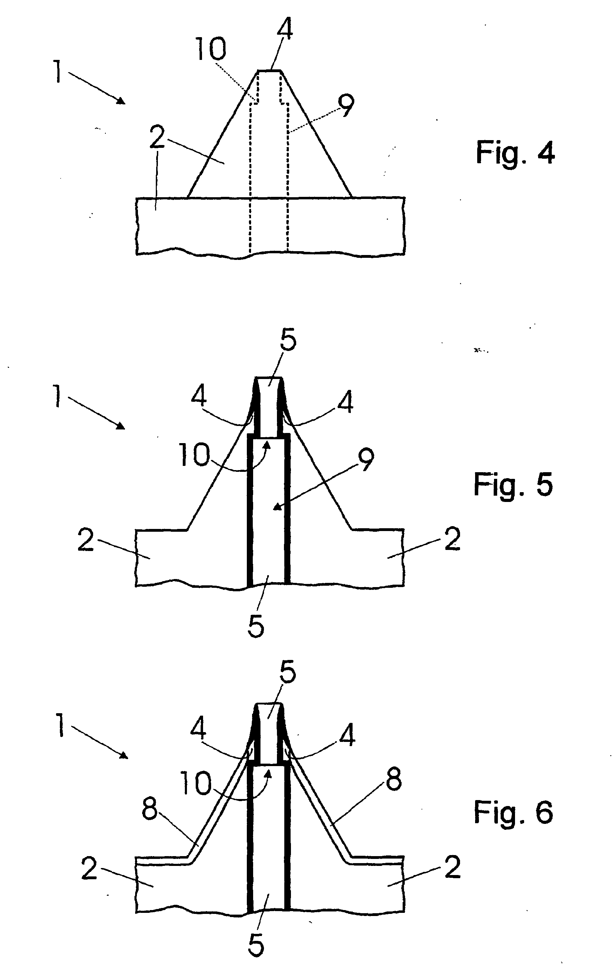

Bei dem erfindungsgemässen Verfahren nach Fig.4 bis 6 wird auf dem Substrat 2 mit einem herkömmlichen Strukturierungsverfahren eine Oberflächenstruktur erzeugt, die einen etwa kegelförmigen oder pyramidenförmigen Vorsprung aufweist. Anschließend wird von der dem Vorsprung abgewandten Rückseite des Substrats 2 her (in Fig.4 unten) ein Zuführkanal 9 eingebracht, der zu einer an der am weitesten vorstehenden Stelle des Vorsprungs befindlichen Mündung führt. Im Mündungsbereich ist der Zuführkanal 9 von einer ringförmigen, scharfen Kante 4 umgrenzt. Wie aus Figur 4 besonders gut erkennbar ist, weist der Zuführkanal 9 einen ersten Kanalabschnitt mit einem größeren Querschnitt und einen zweiten Kanalabschnitt mit einem geringeren Querschnitt auf, der die an der Kante 4 angeordnete Mündung bildet. Die beiden Kanalabschnitte sind durch einen Absatz 10 miteinander verbunden, der in der Nähe der Kante 4 angeordnet ist. Durch die unterschiedlichen Querschnitte der Kanalabschnitte kann der Zuführkanal 9 fertigungstechnisch besser hergestellt werden. Der Zuführkanal 9 kann mit an sich bekannten Verfahren, beispielsweise mittels Laserbohren oder Trench-Ätzen in das Substrat 2 eingebracht werden.

Durch den Zuführkanal 9 wird eine bei der Kante 4 austretende Chemikalie zugeführt, die bei Bestrahlung mit elektromagnetischer Strahlung ein Metall ausscheidet. Während des Zuführens der Chemikalie wird an dem der Kante 4 abgewandten Ende des Zuführkanals 9 Laserstrahlung eingekoppelt, die durch den Zuführkanal 9 bis zu der Kante 4 gelangt. Dadurch wird an der Kante 4 und an der Innenwandung des Zuführkanals 9 Metall aus der durch den Zuführkanal 9 zugeführten Chemikalie ausgeschieden, das sich im Bereich der Kante 4 und an der Innenwand des Zuführkanals 9 ablagert und die Elektrodenschicht 5 einer Hohlelektrode bildet.

Bei einem elektrisch leitfähigen Substrat 2 wird danach der den an der Kante 4 befindlichen Elektrodenbereich umgrenzende Oberflächenbereich des Substrats 2 mit einer chemischen Reaktion in eine elektrisch isolierende Schicht 8 umgewandelt. Dieser Verfahrensschritt entfällt bei einem Substrat 2 aus elektrisch isolierendem Material.

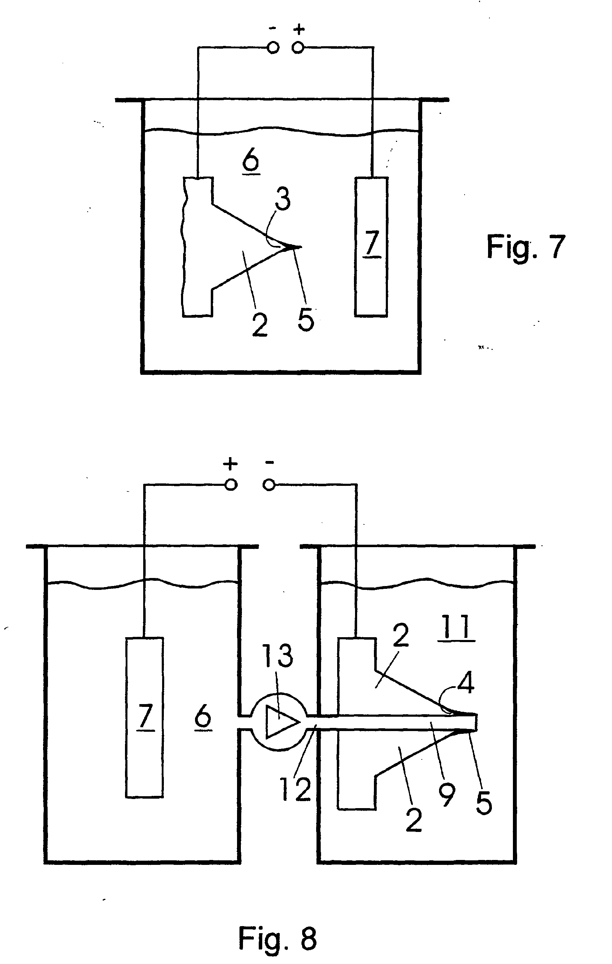

Bei dem nicht erfindungsgemässen Verfahren nach Fig.8 wird ein Substrat 2 in der vorstehend beschriebenen Weise strukturiert und mit einem zuführkanal 9 versehen. Das Substrat 2 wird dann in einem ersten Elektrolyten 11 angeordnet, der Ionen des als Elektrode aufzugalvanisierenden Metalls nicht oder nur in geringer Konzentration aufweist. Durch den Zuführkanal 9 wird ein bei der Kante 4 austretender zweiter, die aufzubringenden Ionen aufweisender Elektrolyt zugeführt. In Fig.8 ist deutlich erkennbar, daß das der Kante 4 abgewandte Ende des Zuführkanals 9 mit einer Versorgungsleitung mit einem dem Elektrolyten aufweisenden Versorgungsbehälter verbunden ist. In die Versorgungsleitung 12 ist eine Pumpe 13 geschaltet, welche den Elektrolyt 6 durch den Zuführkanal 9 langsam zu der Kante 4 fördert. Wie bei dem nicht erfindungsgemässen Ausführungsbeispiel nach Fig.7 ist das Substrat 2 mit dem Minus-Pol und eine mit dem Elektrolyt 6 in Berührung stehende Opferelektrode 7 mit dem Plus-Pol einer Galvanisierungs-Spannungsquelle verbunden. Dadurch wird an der Innenwandnung des Zuführkanals 9 und im Bereich der Kante 4 Metall auf das Substrat 2 aufgalvanisiert. Der Volumenstrom der Pumpe 13 ist so gewählt, daß der an der Kante 4 aus dem Zuführkanal 9 austretende Elektrolyt im wesentlichen verbraucht ist, so daß das metallische Material zwar im Bereich der Kante 4, nicht jedoch an dem sich daran anschließenden kegel- oder pyramidenförmigen Oberflächenbereich des Substrats 2 abgeschieden wird. Nach dem Aufgalvanisieren der Elektrodenschicht wird dieser Bereich durch Umpolen der Galvanisierungs-Spannungsquelle anodisch oxidiert. Dabei ergibt sich an der Oberfläche des Substrats eine elektrisch isolierende Schicht 8 (Figur 6).

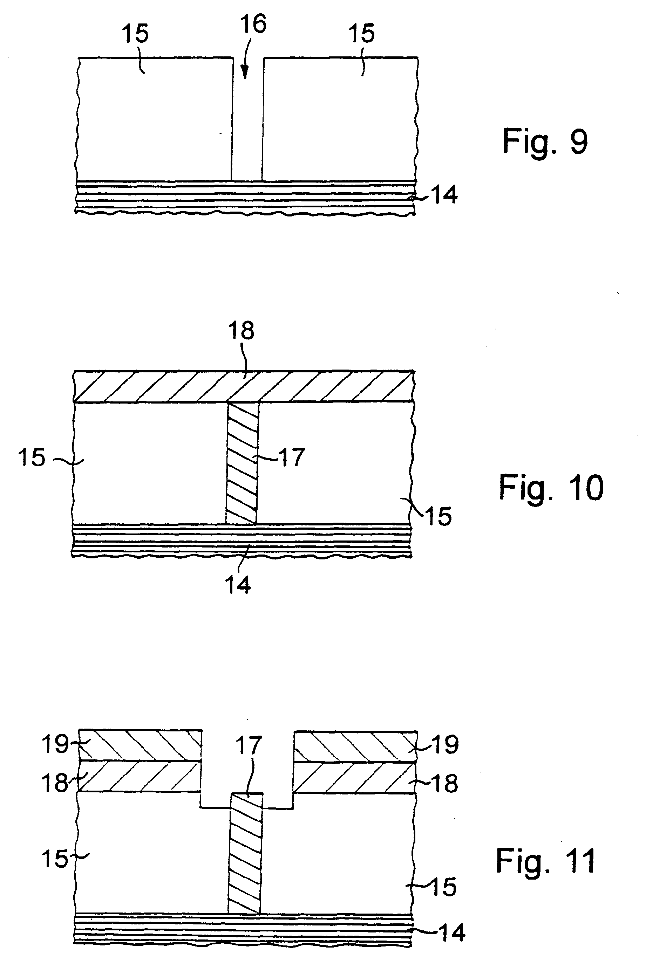

Bei den in Fig.9 bis 13 gezeigten nicht erfindungsgemässen Ausführungsbeispielen wird auf eine elektrisch leitfähige Substratschicht 14 eine Schicht aus elektrisch isolierendem Material 15 aufgetragen. Anschließend wird in dieses Material 15 von der Oberfläche her eine Vertiefung 16 eingebracht, die das isolierende Material 15 bis zu der elektrisch leitfähigen Substratschicht 14 durchsetzt (Fig.9). In die Vertiefung 16 wird mit bekannten Verfahren ein elektrisch leitfähiges Material 17 eingebracht, beispielsweise ein Wolfram, Aluminiumund/oderKupfer enthaltendes Metall. Wie aus Fig.10 besonders gut erkennbar ist, bildet das elektrisch leitfähige Material 17 in dem isolierenden Material 15 eine Durchführung.

Es wird nun eine Passivierungsschicht 18 aufgetragen, die das elektrisch isolierende Material 15 und das in der Vertiefung 16 befindliche elektrische elektrisch leitfähige Material 17 abdeckt. Anschließend wird auf die Passivierungsschicht eine gegen ein Ätzmittel chemisch beständige Photomaske 19 aufgetragen, die im Bereich des elektrisch leitfähigen Materials 17 eine Unterbrechung aufweist. Dann werden ein hinter der Unterbrechung der Photo-Maske 19 befindlicher Bereich der Passivierungsschicht 18 und ein hinter dieser befindlicher, das elektrisch leitfähige Material 17 umgrenzender Bereich des isolierenden Materials 15 durch Ätzen entfernt. Wie aus Fig. 11 besonders gut erkennbar ist, bildet das elektrisch leitfähige Material 17 eine Kante, die an der Oberfläche des isolierenden Materials 15 vorsteht.

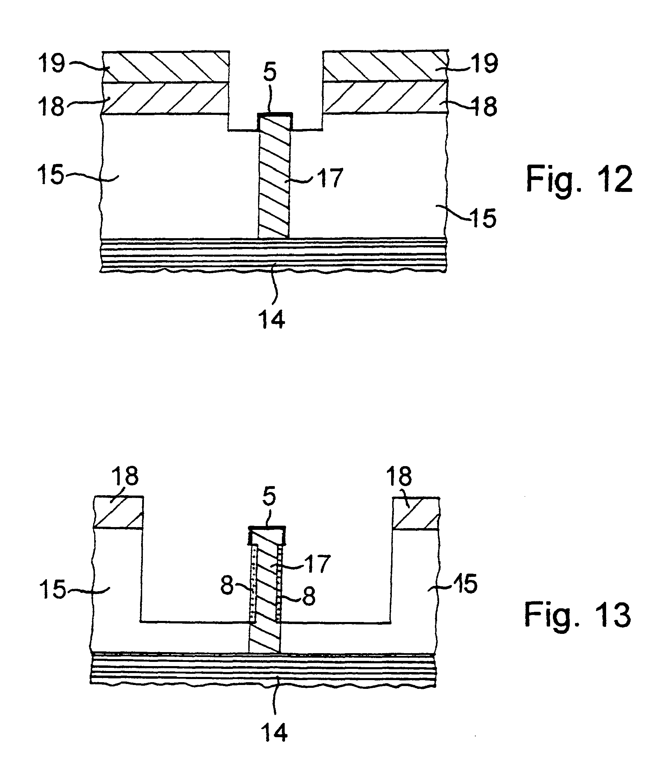

Anschließend wird im Bereich der Kante 4 eine elektrisch leitfähige Elektrodenschicht aus einem Edelmetall, beispielsweise Gold oder Platin aufgalvanisiert. Anschließend wird ein weiterer, zwischen der aufgalvanisierten Elektrodenschicht 5 und der Substratschicht 14 befindlicher, das elektrisch leitfähige Material 17 umgrenzender Bereich des elektrisch isolierenden Materials 15 durch Ätzen entfernt. Dabei wird dieselbe Photo-Maske 19 wie bei dem vorherigen Ätzeprozeß verwendet. Der durch diesen weiteren Ätzprozeß freigelegte Oberflächenbereich des leitfähigen Materials 17 wird durch anodische Oxydation in eine isolierende Schicht 8 umgewandelt. Außerdem wird die Photo-Maske 19 entfernt (Fig.13).

Insgesamt ergibt sich somit eine Elektrode 1, die einen an seiner Oberfläche elektrisch isolierten Vorsprung aufweist, der an seinem freien Ende die Elektrodenschicht 5 trägt. Dabei ist die Elektrodenschicht 5 über das elektrisch leitfähige Material 17 mit der ebenfalls elektrisch leitfähigen Substratschicht 14 verbunden. Über diese Schicht kann beispielsweise eine elektrische Spannung an die Elektrodenschicht 5 angelegt oder ein Meßsignal an der Elektrodenschicht 5 abgegriffen werden.

Erwähnt werden soll noch, daß das elektrisch isolierende Material 15 auch mehrere, im wesentlichen parallel zu der Substratoberfläche verlaufende Schichten aufweisen kann, die zum Freilegen des elektrisch leitfähigen Materials 17 in einem oder mehreren, nacheinander durchgeführten Ätzschritten bereichsweise entfernt werden. Dadurch kann die freie Länge des Elektrodenvorsprunges vergrößert werden.

## Patentansprüche

1. Verfahren zum Herstellen einer Elektrode (1), bei dem zunächst auf einem Substrat (2) eine Oberflächenstruktur erzeugt wird, die wenigstens eine Spitze (3) oder Kante (4) aufweist, **dadurch gekennzeichnet, daß** in das Substrat (2) ein Zuführkanal (9) eingebracht wird, der dicht benachbart zu der an der Oberfläche des substrats angebrachten Spitze (3) oder Kante (4) mündet, daß durch den zuführkanal (9) eine bei der Spitze (3) oder Kante (4) austretende Chemikalie zugeführt wird, die bei Bestrahlung mit elektromagnetischer und/oder korpuskularer Strahlung einen elektrisch leitfähigen Stoff, insbesondere ein Metall ausscheidet, und daß die Chemikalie zum Abscheiden des elektrisch leitfähigen Stoffs an der Spitze oder Kante im Bereich der Spitze (3) oder Kante (4) mit elektromagnetischer und/oder korpuskularer Strahlung bestrahlt wird.

2. Verfahren nach Anspruch 1, **dadurch gekennzeichnet, daß** die elektromagnetische und/oder korpuskulare Strahlung durch den Zuführkanal (9) hindurch in den Bereich der Spitze (3) oder Kante (4) eingestrahlt wird.

3. Verfahren nach Anspruch 1, **dadurch gekennzeichnet, daß** die oberflächenstruktur aus einem elektrisch leitfähigen Material hergestellt wird, daß im Bereich der Spitze (3) oder Kante (4) auf dieses Material wenigstens eine elektrisch leitfähige Elektrodenschicht (5) aufgalvanisiert und/oder durch elektrostatisches Pulverbeschichten aufgetragen wird und daß anschließend ein die an der Spitze (3) oder Kante (4) befindliche Elektrodenschicht (5) umgrenzender Oberflächenbereich des Substrats (2) mit einer chemischen Reaktion in eine isolierende Schicht (8) umgewandelt oder mit einer solchen versehen wird.

4. Verfahren nach Anspruch 3, **dadurch gekennzeichnet, daß** die elektrisch leitfähige Elektrodenschicht (5) auch außerhalb des Bereichs der Spitze (3) oder Kante (4) auf das Substrat aufgebracht wird, und daß danach an der Oberfläche der Elektrodenschicht (5) durch Ätzen Elektrodenmaterial abgetragen wird, bis die Elektrodenschicht (5) bis auf einen im Bereich der Spitze (3) oder Kante (4) verbleibenden Restbereich entfernt ist.

5. Verfahren nach einem der Ansprüche 3 oder 4, **dadurch gekennzeichnet, daß** für die Elektrodenschicht (5) ein Material gewählt wird, das oxidationsbeständiger als das Substrat-Material ist und daß die isolierende Schicht (8) durch Oxidieren des die Elektrodenschicht (5) umgrenzenden Oberflächenbereichs des Substrats (2) erzeugt wird

6. Verfahren nach einem der Ansprüche 3 bis 5, **dadurch gekennzeichnet, daß** für die Elektrodenschicht (5) ein Material gewählt wird, das nitrierbeständiger als das Substrat-Material ist und daß die isolierende Schicht (8) durch Nitrieren des die Elektrodenschicht (5) umgrenzenden Oberflächenbereichs des Substrats (2) erzeugt wird.

7. Verfahren nach einem der Ansprüche 3 bis 6, **dadurch gekennzeichnet, daß** die isolierende Schicht (8) durch anodische Oxidation des die Elektrodenschicht (5) umgrenzenden Oberflächenbereichs des Substrats (2) hergestellt wird.

8. Verfahren nach einem der Ansprüche 3 bis 7, **dadurch gekennzeichnet, daß** beim Erzeugen der Oberfächenstruktur wenigstens eine elektrisch leitfähige Beschichtung auf das Substrat (2) aufgebracht wird, die an der Oberfläche der Oberfächenstruktur angeordnet ist.

9. Verfahren nach einem der Ansprüche 3 bis 8, **dadurch gekennzeichnet, daß** das Substrat (2) zumindest mit einem die Spitze (3) oder Kante (4) aufweisenden Bereich in einem ersten Elektrolyten (11) angeordnet wird, der Ionen des aufzugalvanisierenden Elektrodenmaterials (5) nicht oder nur in geringer Konzentration aufweist, daß durch den Zuführkanal (9) ein bei der Spitze (3) oder Kante (4) austretender zweiter, die aufzubringenden Ionen aufweisender Elektrolyt (6) zugeführt wird, und daß zum Aufgalvanisieren der Elektrodenschicht (5) auf die Spitze (3) oder Kante (4) eine elektrische Spannung zwischen dem Substrat (2) und dem zweiten Elektrolyten (6) angelegt wird.

10. Verfahren nach einem der Ansprüche 1 bis 9, **dadurch gekennzeichnet, daß** der Zuführkanal (9) derart in das Substrat (2) eingebracht wird, daß sich sein Querschnitt ausgehend von dem der Spitze (3) oder Kante (4) abgewandten Kanalende zu einer im Bereich der Spitze (3) oder Kante (4) angeordneten Mündung vorzugsweise benachbart zu der Mündung vermindert.

11. Verfahren nach einem der Ansprüche 1 bis 10, **dadurch gekennzeichnet, daß** als Substrat (2) ein Halbleitermaterial verwendet wird.

12. Verfahren nach einem der Ansprüche 1 bis 11, **dadurch gekennzeichnet, daß** im Bereich der Spitze (3) oder Kante (4) ein Edelmetall aufgebracht wird.

## Claims

1. A process for manufacturing an electrode (1) in which firstly a surface structure comprising at least one tip (3) or edge (4) is produced on a substrate (2),
**characterised in that** a supply duct (9) is formed in the substrate (2), which supply duct opens in close proximity to the tip (3) or edge (4) fixed to the surface of the substrate,
**in that** a chemical emerging at the tip (3) or edge (4) is supplied through the supply duct (9), which chemical precipitates out an electrically conductive material, in particular a metal, when irradiated with electromagnetic and/or particulate radiation,
and **in that** in the area of the tip (3) or edge (4) the chemical is irradiated with electromagnetic and/or particulate radiation to precipitate out the electrically conductive material at the tip or edge.

2. A process according to Claim 1,
**characterised in that** the electromagnetic and/or particulate radiation is beamed through the supply duct (9) into the area of the tip (3) or edge (4).

3. A process according to Claim 1,
**characterised in that** the surface structure is produced from
an electrically conductive material,
**in that** in the area of the tip (3) or edge (4) at least one electrically conductive electrode layer (5) is galvanised and/or applied by electrostatic powder coating onto this material,
and **in that** subsequently a surface area of the substrate (2) surrounding the electrode layer (5) located on the tip (3) or edge (4) is converted by a chemical reaction into an insulating layer (8) or is provided with such an insulating layer.

4. A process according to Claim 3,
**characterised in that** the electrically conductive electrode layer (5) is also applied to the substrate outside the area of the tip (3) or edge (4),
and **in that** subsequently electrode material is removed from the surface of the electrode layer (5) by etching until the electrode layer (5) is removed down to a residual area remaining in the area of the tip (3) or edge (4).

5. A process according to one of Claims 3 or 4,
**characterised in that** for the electrode layer (5) a material is selected which is more resistant to oxidation than the substrate material,
and **in that** the insulating layer (8) is produced by oxidation of the surface area of the substrate (2) surrounding the electrode layer (5).

6. A process according to one of Claims 3 to 5,
**characterised in that** for the electrode layer (5) a material is selected which is more resistant to nitration than the substrate material,
and **in that** the insulating layer (8) is produced by nitration of the surface area of the substrate (2) surrounding the electrode layer (5).

7. A process according to one of Claims 3 to 6,
**characterised in that** the insulating layer (8) is produced by anodic oxidation of the surface area of the substrate (2) surrounding the electrode layer (5).

8. A process according to one of Claims 3 to 7,
**characterised in that** when creating the surface structure, at least one electrically conductive coating is applied to the substrate (2), which coating is disposed on the surface of the surface structure.

9. A process according to one of Claims 3 to 8,
**characterised in that** the substrate (2) is disposed, at least with an area comprising the tip (3) or edge (4), in a first electrolyte (11) that does not comprise ions of the electrode material (5) to be galvanised, or only in small concentrations,
**in that** a second electrolyte (6) that emerges at the tip (3) or edge (4) and that comprises the ions to be applied is supplied through the supply duct (9),
and **in that** for galvanisation of the electrode layer (5) onto the tip (3) or edge (4), an electrical voltage is applied between the substrate (2) and the second electrolyte (6).

10. A process according to one of Claims 1 to 9,
**characterised in that** the supply duct (9) is introduced into the substrate (2) in such a manner that its cross section becomes reduced starting from the end of the duct remote from the tip (3) or edge (4) to an opening provided in the area of the tip (3) or edge (4) and preferably adjacent to the opening.

11. A process according to one of Claims 1 to 10,
**characterised in that** a semiconductor material is used as the substrate (2).

12. A process according to one of Claims 1 to 11,
**characterised in that** a precious metal is applied in the area of the tip (3) or edge (4).

## Revendications

1. Procédé de fabrication d'une électrode (1) selon lequel on génère tout d'abord une structure de surface sur un substrat (2) qui a au moins une pointe (3) ou une arête (4),
**caractérisé en ce qu'**
on introduit un canal d'alimentation (9) dans le substrat (2) qui débouche au voisinage immédiat de la pointe (3) ou de l'arête (4) sur la surface supérieure du substrat,
on fournit par le canal d'alimentation (9), un produit chimique sortant par la pointe (3) ou l'arête (4), ce produit chimique donnant sous l'effet d'un rayonnement électromagnétique et/ou corpusculaire, une matière électro-conductrice, notamment un métal et
les produits chimiques servant à dégager une matière électro-conductrice à la pointe ou dans l'arête au niveau de la pointe (3) ou de l'aréte (4) sont exposés à un rayonnement électromagnétique et/ou corpusculaire.

2. Procédé selon la revendication 1,
**caractérisé en ce que**
le rayonnement électromagnétique et/ou corpusculaire est fourni par le canal d'alimentation (9) dans la région de la pointe (3) ou de l'arête (4).

3. Procédé selon la revendication 1,
**caractérisé en ce que**
la structure de surface est fabriquée dans une matière électro-conductrice, au niveau de la pointe (3) ou de l'arête (4), cette matière comporte au moins une couche d'électrode (5) électro-conductrice, réalisées par galvanisation et/ou par un revêtement électrostatique, et de poudre
ensuite, on convertit par une réaction chimique une zone de surface supérieure du substrat (2) entourant la couche d'électrode (5) adjacente à la pointe (3) ou à l'arête (4), en une couche isolante (8) ou on la munit d'une telle couche.

4. Procédé selon la revendication 3,
**caractérisé en ce qu'**
la couche d'électrode conductrice électrique (5) est appliquée sur le substrat égalent au-delà de la région de la pointe (3) ou de l'arête (4), et ensuite on enlève de la surface de la couche d'électrode (5) de la matière d'électrode par gravure jusqu'à ce que la couche d'électrode (5) soit enlevée à l'exception d'une zone résiduelle dans la région de la pointe (3) ou de l'arête (4).

5. Procédé selon l'une des revendications 3 ou 4,
**caractérisé en ce que**
pour la couche d'électrode (5) on sélectionne une matière qui est plus résistance à l'oxydation que le substrat et on génère la couche isolante (8) par oxydation de la région de surface supérieure du substrat (2) entourant la couche d'électrode (5).

6. Procédé selon la revendication 3 à 5,
**caractérisé en ce que**
pour la couche d'électrode (5), on choisit une matière qui résiste plus que la matière du substrat à la nitruration et on génère la couche isolante (8) par nitruration de la région de surface supérieure du substrat (2) entourant la couche d'électrode (5).

7. Procédé selon l'une des revendications 3 à 6,
**caractérisé en ce qu'**
on réalise la couche isolante (8) par oxydation anodique de la région de surface du substrat (2) entourant la couche d'électrode (5).

8. Procédé selon l'une des revendications 3 à 7,
**caractérisé en ce qu'**
on applique au moins un revêtement électro-conducteur sur le substrat (2) pour générer la structure de surface, revêtement qui est prévu sur la surface supérieure de la structure de surface supérieure.

9. Procédé selon l'une des revendications 3 à 8,
**caractérisé en ce que**
le substrat (2) avec une région ayant au moins une pointe (3) ou une arête (4) est mis dans un premier électrolyte (11) qui présente des ions de la matière d'électrode (15) à appliquer par galvanisation ou non, à concentration faible on applique par le canal d'alimentation (9) en sortant par la pointe (3) ou l'arête (4), le second électrolyte (6) qui présente des ions, et
pour réaliser par galvanisation la couche d'électrode (5) sur la pointe (3) ou l'arête (4), on applique une tension électrique entre le substrat (2) et le second électrolyte (6).

10. Procédé selon l'une des revendications 1 à 9,
**caractérisé en ce que**
le canal d'alimentation (9) est réalisé dans le substrat (2) pour que, partant de l'extrémité du canal, opposée à celle de la pointe (3) ou de l'arête (4), la section du canal diminue vers l'embouchure prévue dans la région de la pointe (3) ou de l'arête (4) ou au voisinage de l'embouchure.

11. Procédé selon l'une des revendications 1 à 10,
**caractérisé en ce que**
le substrat (2) est un matériau semi-conducteur.

12. Procédé selon l'une des revendications 1 à 11,
**caractérisé par**
du métal noble appliqué dans la région de la pointe (3) ou de l'arête (4).
